# EUROPÄISCHE PATENTANMELDUNG

(11) **EP 0 609 472 A1**
(43) Veröffentlichungstag der Anmeldung: **10.08.1994**
(21) Anmeldenummer: 93101554.9
(22) Anmeldetag: 02.02.1993
(51) Int. Cl.: A01K 75/00, A01K 73/00

(54) **Fangerfassung an Bord von Fischereifahrzeugen**

(71) Anmelder: MWB MOTORENWERK BREMERHAVEN GmbH, D-27517 Bremerhaven (DE)
(72) Erfinder: Jesse, Armin, W-2853 Dorum (DE); Picker, Gerhard, W-2857 Langen (DE)
(74) Vertreter: Grünecker, Kinkeldey, Stockmair & Schwanhäusser Anwaltssozietät

(57) **Zusammenfassung**

Fischfangüberwachungssystem für die Erfassung und Dokumentation der während einer Fangfahrt auf einem Fischereifahrzeug eingesetzten Fangnetze mit: einer Kamera (2) für die optische Erfassung des momentan verwendeten und eingeholten Fangnetzes (1), einer Bildverarbeitungseinrichtung (4) für die digitale Verarbeitung des von der Kamera (2) gelieferten Bildes und Analyse der durch das Bild erfaßten Maschengeometrie des Fangnetzes, und einer Speichereinrichtung (6) zum Abspeichern der Maschengeometriekenndaten zusammen mit den zugehörigen und von der nautischen Zentrale (5) bereitgestellten Daten, in einem Datensatz, wobei die Gesamtheit dieser Datensätze die Fangfahrt dokumentieren und Fischfangüberwachungssystem für die Erfassung und Dokumentation der während einer Fangfahrt auf einem Fischereifahrzeug angesetzten Fangnetze mit: einer Kamera (2) für die optische Erfassung des momentan verwendeten und eingeholten Fangnetzes (1), einer Entfernungsmeßeinrichtung (3) zum Messen des Abstandes zwischen der Kamera (2) und dem zu erfassenden Fangnetz (1), einer Bildverarbeitungseinrichtung (4) für die digitale Verarbeitung des von der Kamera (2) gelieferten Bildes, wobei die von der Entfernungsmeßeinrichtung (3) bereitgestellten Abstandsdaten in die Verarbeitung mit einbezogen werden, und einer Speichereinrichtung (6) zum Abspeichern der gewonnenen Bilddaten als Datensatz.

## Beschreibung

Die vorliegende Erfindung betrifft ein Fischfangüberwachungssystem gemäß den Merkmalen des Patentanspruchs 1 bzw. gemäß den Merkmalen des Patentanspruchs 2.

Die Fangüberwachung an Bord von Fischereifahrzeugen im Gebiet des EG-Meeres erfolgt aufgrund von Quotenzuteilungen mittels eines vom Kapitän zu führenden Logbuches. Diese Kontrolle wird auf nationaler Ebene der EG-Staaten von länderspezifischen Überwachungsverfahren überlagert, die beispielsweise funktechnische An- und Anmeldungen beim Einlaufen in Hoheitsgewässern oder örtliche Kontrollmaßnahmen auf See umfassen.

Ziel aller Quotenregelungen und Fangbeschränkungen ist es, Raubfänge zu verhindern, Fischbestände in den Fanggebieten zu erhalten und in vernünftigen Grenzen der wirtschaftlichen Nutzung zuzuführen.

Die EG-Partner versuchen seit Jahren, den erwähnten Prinzipien zu entsprechen und politische Lösungen, Empfehlungen und Richtlinien zu finden.

Diese überstaatlichen Vereinbarungen erfordern die Entwicklung von technischen Anlagen und Methoden zur Überwachung der Fangmethoden und -gewohnheiten, um der ökologischen und wirtschaftlichen Situation in den EG-Meeren gerecht zu werden.

Das Logbuchverfahren und sporadische Überwachungsmaßnahmen sind jedoch nicht geeignet, um alle im EG-Bereich getroffenen Vereinbarungen überwachen zu können.

Der vorliegenden Erfindung liegt daher die Aufgabe zugrunde, ein Fischfangüberwachungssystem anzugeben, das eine verbesserte Kontrolle der Fangmethoden durch Aufsichtsorgane der EG-Staaten ermöglicht.

Die vorstehend genannte Aufgabe wird durch die Merkmale des Patentanspruchs 1 bzw. durch die Merkmale des Patentanspruchs 2 gelöst.

Das Fischfangüberwachungssystem gemäß dem Patentanspruch 1 bietet den Vorteil, daß es den Kontrollorganen ermöglicht wird, anhand der aufgezeichneten Daten die Fangfahrt des betreffenden Fischereifahrzeuges nachzuvollziehen. Das Fischfangüberwachungssystem gemäß Patentanspruch 1 gibt insbesondere die Möglichkeit zur Überprüfung, welche Netzmaschengrößen in den durchquerten Fischfanggebieten verwendet wurden und damit die Möglichkeit zur Feststellung, ob die internationalen Vereinbarungen eingehalten wurden. Diese Möglichkeit der Überprüfung bzw. Beweissicherung wird dabei in besonders übersichtlicher Weise ermöglicht. Da nur relativ kurze Datensätze, vorzugsweise enthaltend Angaben über Fanggebiet, Datum, Uhrzeit, zulässiges Netzgarnmaterial und Maschengeometrie abgespeichert werden, läßt sich das aufgezeichnete Material selbst bei mehrwöchiger Fangfahrt leicht aufbereiten und analysieren. Da das Fischfangüberwachungssystem aufgrund seiner Computersteuerung vollkommen selbstständig zu arbeiten vermag, können Manipulationen seitens der Schiffsbesatzung ausgeschaltet werden, was für eine wirksame Kontrolle selbstvertändlich von großer Bedeutung ist.

Auch das Fischfangüberwachungssystem gemäß Patentanspruch 2 ermöglicht, ähnlich dem Fischfangüberwachungssystem gemäß Patentanspruch 1, die Überprüfung der auf einem Fischereifahrzeug während einer Fangfahrt verwendeten Netzmaschengrößen. Dieses System ermöglicht eine besonders exakte Erfassung der verwendeten Netzmaschengröße, da bei der Verarbeitung der durch die Kamera erfaßten Bilder die von einer Entfernungsmeßeinrichtung erfaßten Abstände zwischen Kamera und Netz miteinbezogen werden. Aufgrund der in den Bilddaten enthaltenen Information über den während der entsprechenden Aufnahme herrschenden Abstand zwischen der Kamera und dem Netz, läßt sich die absolute Größe der verwendeten Maschen besonders einfach und exakt ermitteln.

Eine bevorzugte Ausführungsform des Fischfangüberwachungssystems gemäß Patentanspruch 2 sieht eine Analyse hinsichtlich der Maschengeometrie des erfaßten Netzes vor, was den Vorteil bietet, daß bereits während der Fangfahrt Daten Über die absoluten Maschengeometrie abgespeichert werden. Die aufbereiteten Maschengeometriekenndaten können Grundlage für eine besonders einfache Überprüfung durch ein Kontrollorgan darstellen.

Eine weitere, bevorzugte Ausführungsform des Fischfangüberwachungssystems gemäß Patentanspruch 2 sieht vor, daß die entsprechenden Datensätze mit Daten über Fanggebiet, Netzgarnmaterial, Fangdatum und -uhrzeit, wie sie von der nautischen Zentrale bereitgestellt werden, ergänzt werden. Dies führt zu den im Zusammenhang mit dem Gegenstand des Patentanspruch 1 erwähnten Vorteilen einer vollständigen Dokumentation der Fangfahrt des entsprechenden Fischereifahrzeugs und somit zu einer schnellen und einfachen Überprüfung dahingehend, ob die internationalen Fangvereinbarungen eingehalten worden sind.

Eine weitere Ausführungsform des Fischfangüberwachungssystems gemäß Patentanspruch 1 sieht die Verwendung einer Entfernungsmeßeinrichtung vor, deren Vorteil bereits in Zusammenhang mit Patentanspruch 2 erläutert wurde.

Vorzugsweise ist in den von dem erfindungsgemäßen Fischfangüberwachungssystem erstellten Datensätzen auch der Name des Kapitäns enthalten, wodurch die Dokumentation weiter vervollständigt wird.

Vorzugsweise filtert die in dem Fangüberwachungssystem enthaltene Bildverarbeitungseinrichtung die durch das Bild erfaßte Netzmaschenstruktur mittels geeigneter Bildverarbeitungsoperationen heraus und speichert das so erhaltene selektierte Bild ab. Das skelettierte Bild kann Grundlage für die Analyse der Maschengeometrie darstellen und neben den gesondert abgespeicherten Maschengeometriekenndaten als zusätzlicher Nachweis über das verwendete Netz dienen.

Bevorzugtermaßen werden auch die von der Kamera erfaßten Bilder zusätzlich mit abgespeichert. Dies kann auf einem separaten Datenträger in analoger oder digitaler Form geschehen. Durch die zusätzliche Speicherung des tatsächlich aufgenommenen Bildes bietet sich eine weitere Überprüfungsmöglichkeit für den Fall, daß die Richtigkeit der erstellten Datensätze angezweifelt wird oder derartige Datensätze verlorengehen.

Weiterhin werden die von der Entfernungsmeßeinrichtung gelieferten Anstandsdaten vorzugsweise zur Scharfeinstellung der Kamera verwendet. Das bedeutet, daß für die beiden Funktionen, Entfernungsmessung für die Bildverarbeitung, und Entfernungsmessung für die Scharfeinstellung nur eine Sensorik vorgesehen sein muß. Dies kann entweder eine bereits in der Kamera integrierte oder eine externe Entfernungsmeßeinrichtung, an die auch die Scharfeinstellungsregelung der Kamera angeschlossen ist, sein, was insgesamt zu einer Kostenreduzierung des Systems führt.

Weiterhin werden bei einer bevorzugten Ausführungsform der vorliegenden Erfindung die von der Entfernungsmeßeinrichtung gelieferten Abstandsdaten auch für die Zoomeinstellung der Kamera verwendet, was besonders bei einer Fischfangüberwachungseinrichtung gemäß Patentanspruch 1, bei der keine eigene Entfernungsmeßeinrichtung vorgesehen ist, vorteilhaft ist, da somit die aufgenommenen Fangnetze stets mit etwa gleichbleibenden Proportionen erfaßt werden können. Bei einem Fischfangüberwachungssystem gemäß Patentanspruch 2 kann eine zusätzliche Zoomeinstellung vorteilhaft sein, um stets genügend große Aufnahmen des verwendeten Netzes zu erhalten, die dann einer Bildverarbeitung unter Berücksichtigung der durch die Entfernungsmeßeinrichtung bereitgestellten Abstandsdaten unterzogen werden. Selbstverständlich muß in diesem Fall die Veränderung der Zoomeinstellung auch bei der Bildverarbeitungsoperation mit berücksichtigt werden.

Eine weitere bevorzugte Ausführungsform des erfindungsgemäßen Fischfangüberwachungssystems sieht vor, daß die erstellten Datensätze über Funk an ein externes Kontrollorgan übermittelt werden. Dies ermöglicht die unverzögerte Überwachung des Fischfangs mit dem Vorteil, daß bei Verstoß gegen die Vereinbarungen ein sofortiges Einschreiten bzw. eine Benachrichtigung über die falsche Netzwahl erfolgen kann. Weiterhin kann durch die direkte Übermittlung der gesammelten Datensätze die Möglichkeit zur Manipulation seitens der Besatzung weitgehend ausgeschlossen werden.

Bevorzugtermaßen ist das erfindungsgemäße Fischfangüberwachungssystem so ausgelegt, daß selbst ohne Funkübermittlung an keiner Stelle durch die Schiffsbesatzung manipuliert werden kann. Insbesondere durch das Sicherstellen, daß Dateneingaben nur durch autorisierte Personen vorgenommen werden können, kann Manipulationen wirksam vorgebeugt werden. Weiterhin sind auch die aufgezeichneten Daten nur autorisierten Personen zugänglich.

In einer weiteren bevorzugten Ausführungsform findet bereits an Bord des Fischereifahrzeugs eine Plausibilitätsprüfung zwischen momentanem Fanggebiet und ermittelter Maschengröße statt. Diese Plausibilitätssprüfung kann die spätere Auswertung der Datensätze erleichtern bzw. die Schiffsbesatzung von der Verwendung eines nicht zugelassenen Netzes in Kenntnis setzen.

Ebenfalls um Manipulationen ausschließen zu können, wird die Bildaufnahme durch die Kamera vorzugsweise automatisch ausgelöst.

Bevorzugtermaßen hängt diese Auslösung dabei von einer Betätigung der Windensteuerung, was das Einholen oder Auslegen eines Netzes anzeigt, ab.

Das Auslösen einer Bildaufnahme kann auch von einer signifikanten Veränderung des von der Kamera erfaßten Bildes abhängig gemacht werden, was sicherstellt, daß jeder Netzeinhol- bzw. Netzauslegvorgang erfaßt wird.

Die Kamera ist vorzugsweise eine Videokamera, die wiederum als CCD-Videokamera ausgeführt sein sollte. Gegenüber der Verwendung einer Bildkamera bietet eine Videokamera den Vorteil, daß ein internationaler Vorgang als Video festgehalten und entsprechend weiterverarbeitet bzw. gespeichert werden kann.

Eine weitere bevorzugte Ausführungsform sieht vor, die Kamera zusätzlich zur Bordüberwachung einzusetzen. Dadurch wird eine zusätzliche Videokamera für die Bordüberwachung überflüssig, was ebenfalls zur Wirtschaftlichkeit des Systems beiträgt.

Im folgenden wird ein bevorzugtes Ausführungsbeispiel der vorliegenden Erfindung unter Bezugnahme auf die beiliegende Zeichnung näher erläutert.

Die Zeichnung zeigt dabei ein Blockschaltbild einer bevorzugten Ausführungsform des erfindungsgemäßen Fischfangüberwachungssystems.

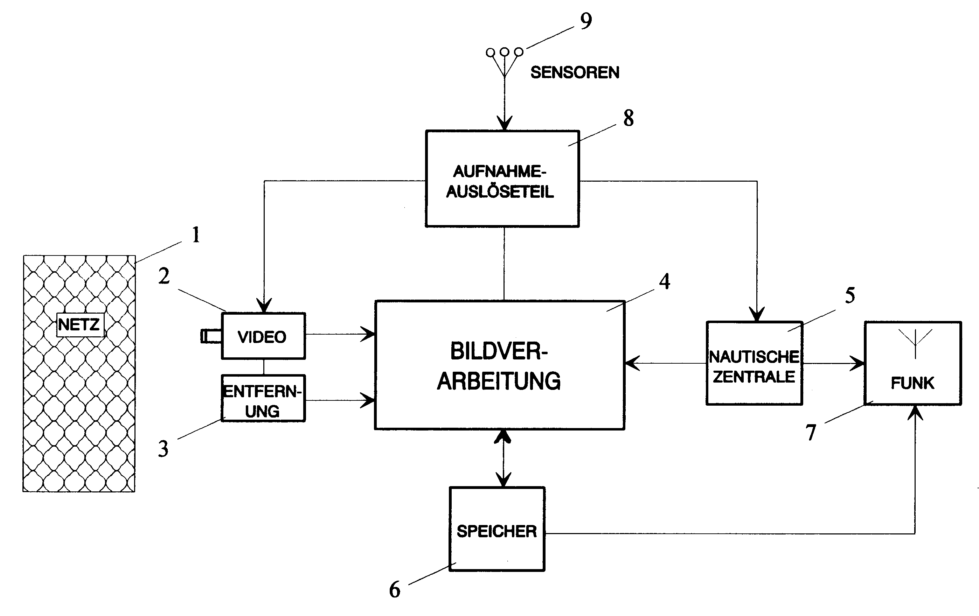

Das momentan verwendete Netz 1 wird von einer Videokamera 2, die vorzugsweise durch eine hochauflösende CCD-Farb-Videokamera gebildet wird, erfaßt. Dem Einsatzbereich auf See entsprechend ist die Videokamera wetterunabhängig in einem thermisch geregelten Gehäuse untergebracht und stoßunabhängig gelagert. Die interne Schaltung der Videokamera weist jeweils eine Schaltung zur Scharfeinstellung und Zoomeinstellung auf. Der Videokamera zugeordnet ist eine Entfernungsmeßeinrichtung 3 zum Erfassen des Abstandes zwischen dem aufzunehmenden Fangnetz 1 und der Videokamera 2. Die Entfernungsmeßeinrichtung 3 ist hierzu in der Nähe der Videokamera angeordnet und setzt für die Entfernungsbestirmung vorzugsweise Ultraschall ein. Andere Entfernungsmeßverfahren beispielsweise auf Grundlage optischer Meßverfahren können ebenfalls vorgesehen sein. Die von der Entfernungsmeßeinrichtung 3 ermittelten Abstandsdaten und die von der Videokamera gemachten Bilder werden einem Bildverarbeitungsteil 4 zugeführt. Zusätzlich können die Abstandsdaten außerdem der Videokamera zur Regelung der Scharfund Zoomeinstellung zugeführt werden. Dies ist in der Fig. 1 durch die gestrichelte Verbindung angedeutet.

Die Entfernungsmeßeinrichtung erfaßt den sich unter Umständen von Aufnahme zu Aufnahme unter Umständen verändernden Abstand zwischen Netz 1 und Videokamera 2, so daß diese Abstandsänderung bei der Bildverarbeitung mit berücksichtigt werden kann, was im folgenden näher beschrieben wird. Wie erwähnt, können die erfaßten Entfernungsdaten auch zur Scharfeinstellung und Zoomeinstellung in der Videokamera 2 verwendet werden. Eine die Veränderung des Abstandes zwischen Netz 1 und Videokamera 2 kompensierende Veränderung der Zoomeinstellung bewirkt, daß die zu ermittelnden Netzmaschen stets in einem etwa gleichbleibenden Größenverhältnis aufgenommen werden, wodurch eine Analyse der Maschengrößen erleichtert wird. Die Entfernungsmeßeinrichtung 3 kann auch durch eine bereits in der Videokamera 2 integrierte Entfernungsmeßeinrichtung gebildet sein.

Die Verarbeitung der von der Videokamera gelieferten Bilder in der Bildverarbeitungseinheit 4 erfolgt digital. Dazu werden die Bilder entweder von der Videokamera bereits in digitaler Form bereitgestellt, oder in der Bildverarbeitungseinheit 4 einer Digitalumwandlung unterworfen. Die Bildverarbeitungseinheit 4 unterzieht die von der Videokamera gelieferten Bilder einer Bildverarbeitungsoperation, die vorzugsweise zuerst eine Skelettierung des auf den Bildern dargestellten Maschenmusters zur Folge hat. Bei dieser Verarbeitung werden entweder vor der Skelettierung oder anschließend die von der Entfernungsmeßeinrichtung 3 gelieferten Abstandsdaten berücksichtigt, wodurch sich insgesamt entfernungsinvariante Darstellungen der Fangnetze bzw. der Maschen ergeben. Mittels geeigneter Analyseverfahren werden anhand der vorverarbeiteten Darstellungen Maschengeometriekenndaten ermittelt, aus denen sich insbesondere der Maschendurchmesser ergibt. Die für jedes Bild ermittelten Maschengeometriekenndaten werden zusammen mit von der nautischen Zentrale (Brücke) 5 gelieferten Daten über Fanggebiet, Netzgarnmaterial, Fangdatum, Uhrzeit und Name des Kapitäns in einem kombinierten Datensatz im Speicher 6 gespeichert.

Somit werden zu geeigneten Zeiten von der Videokamera 2 Bilder gemacht, die zusammen mit den von der nautischen Zentrale 5 kommenden Informationen in der Bildverarbeitungseinheit 4 verarbeitet werden und als kurze Datensätze zur Dokumentation der Fangoperation abgespeichert werden. Durch diese Verknüpfung relevanter Daten wird selbst bei mehrtägiger bzw. mehrwöchiger Fangfahrt die Menge der später von einem Kontrollorgan zu analysierenden Daten geringgehalten. Selbstverständlich können zur weiteren Dokumentation der Fangfahrt bzw. zu Beweiszwecken die von der Videokamera aufgenommenen Bilder separat in analoger oder digitaler Form gespeichert werden. Auch die durch die Skelettierungsoperation aufbereitete Netzstrukturen können als weiteres Dokumentationsmaterial im Speicher abgelegt werden. Der Speicher 6 kann durch eine Festplatte, ein Floppy DiscLaufwerk, eine Anzahl von RAM-Bausteinen oder eine Kombination aus diesen gebildet werden.

Das System ist bevorzugtermaßen so ausgelegt, daß keine Beeinflussung durch unautorisierte Personen möglich ist. Insbesondere die Dateneingabe in den Speicher durch nichtautorisierte Personen wird durch geeignete Maßnahmen verhindert. Nach einer Fangfahrt können die im Speicher angesammelten Daten von einer autorisierten Person abgeholt bzw. abgerufen werden.

Besonders zweckmäßig ist auch die sofortige Übermittlung der erstellten Datensätze an ein zuständiges Kontrollorgan über Funk. Dies kann durch die in Fig. 1 gezeigte Funkstation 7 veranlaßt werden. Das Zur-Verfügung-Stehen der angesammelten Datensätze ohne mehrtägige Verzögerung entsprechend der Dauer der Fangfahrt setzt das Kontrollorgan in die Lage, unmittelbar auf unkorrekte Fangvorgänge reagieren zu können. Auch die Möglichkeit der Manipulation der erstellten Datensätze durch die Schiffsbesatzung ist damit auf ein Minimum reduziert. Die von der Bildverarbeitungseinheit 4 erstellten Daten können teilweise auch der nautischen Zentrale als Information zur Verfügung gestellt werden, wobei selbstverständlich verhindert werden muß, daß dies eine Manipulation ermöglicht. Um den Kapitän über eine unkorrekte Fangoperation zu informieren, kann in der Bildverarbeitungseinheit 4 eine Plausibilitätsprüfung bezüglich der ermittelten Maschengeometriedaten und des Fanggebietes durchgeführt werden. Dazu können in dem Speicher 6 Stammdaten gespeichert sein, welche die in den einzelnen Fanggebieten erlaubten Maschengrößen angeben und in die Bildverarbeitungseinheit mit den tatsächlich ermittelten Daten verglichen werden. Das Ergebnis dieser Plausibilitätsprüfung kann ebenfalls mit in den Datensatz aufgenommen werden, um die spätere Analyse zu erleichtern.

Die Zeitpunkte, zu denen Aufnahmen durch die Videokamera 2 auszulösen sind, werden durch den Aufnahmeauslösesteuerteil 8 vorgegeben. Der von dem Aufnahmeauslösesteuerteil 8 zum Auslösen einer Aufnahme an die Videokamera 2 abgegebene Impuls kann von verschiedenen vorbereitenden Maßnahmen abhängen. Derartige Maßnahmen sind beispielsweise die Aktivierung des Systems im gesamten, das Eingehen gewisser Sensorsignale von den Sensoren 9 sowie ein von der Schiffsbesatzung manuell eingegebener Aufnahmebefehl. Um eventuellen Manipulationsmöglichkeiten vorzubeugen, sollte jedoch eine manuelle Beeinflussung seitens der Besatzung nicht vorgesehen werden.

Da Aufnahmen stets vor oder nach erfolgten Fangoperationen sinnvoll sind, bietet es sich an, die Windensteuerung bzw. die Windenbewegung selbst mit in das zur Bildaufnahme führende Kriterium miteinzubeziehen. Die Sensoren 9 können dazu an den Winden angebracht sein und beim Auslegen eines Netzes einen Impuls abgeben, so daß das sich noch auf dem Fangdeck befindliche Netz von der Videokamera erfaßt wird. Alternativ oder zusätzlich dazu kann vorgesehen sein, daß nach dem Einholen, wenn die Winden zum Stehen kommen, ebenfalls eine Aufnahme eingeleitet wird. Alternativ oder zusätzlich dazu kann weiter vorgesehen sein, daß das von der Videokamera erfaßte Bild ständig auf Veränderungen durch die Bildverarbeitungseinheit 4 überprüft wird und daß bei Vorliegen signifikanter Bildinhaltsveränderungen ein Impuls an den Aufnahmeauslösesteuerteil 8 abgegeben wird, was zu einem Aufnahmepuls an die Videokamera 2 führt.

Bei einer derartigen Konfiguration bietet es sich außerdem an, die Videokamera 2 zur allgemeinen Decküberwachung einzusetzen, die erfaßten Bilder ständig auszuwerten und bei den oben angesprochenen Bedingungen ein entsprechendes Bild der Bildverarbeitung zur Netzanalyse zuzuführen.

## Patentansprüche

1. Fischfangüberwachungssystem für die Erfassung und Dokumentation der während einer Fangfahrt auf einem Fischereifahrzeug eingesetzten Fangnetze mit:
einer Kamera (2) für die optische Erfassung des momentan verwendeten und eingeholten Fangnetzes (1),
einer Bildverarbeitungseinrichtung (4) für die digitale Verarbeitung des von der Kamera (2) gelieferten Bildes und Analyse der durch das Bild erfaßten Maschengeometrie des Fangnetzes, und
einer Speichereinrichtung (6) zum Abspeichern der Maschengeometriekenndaten zusammen mit den zugehörigen und von der nautischen Zentrale (5) bereitgestellten Daten, vorzugsweise über Fanggebiet, zulässiges Netzgarnmaterial, Fangdatum und -uhrzeit in einem Datensatz, wobei die Gesamtheit dieser Datensätze die Fangfahrt dokumentieren.

2. Fischfangüberwachungssystem für die Erfassung und Dokumentation der während einer Fangfahrt auf einem Fischereifahrzeug angesetzten Fangnetze mit:
einer Kamera (2) für die optische Erfassung des momentan verwendeten und eingeholten Fangnetzes (1),
einer Entfernungsmeßeinrichtung (3) zum Messen des Abstandes zwischen der Kamera (2) und dem zu erfassenden Fangnetz (1),
einer Bildverarbeitungseinrichtung (4) für die digitale Verarbeitung des von der Kamera (2) gelieferten Bildes,
wobei die von der Entfernungsmeßeinrichtung (3) bereitgestellten Abstandsdaten in die Verarbeitung mit einbezogen werden, um entfernungsinvariante Bilddaten zu erhalten, und
einer Speichereinrichtung (6) zum Abspeichern der gewonnenen Bilddaten als Datensatz, wobei die Gesamtheit dieser Datensätze die während einer Fangfahrt eingesetzten Netzmaschengrößen dokumentieren.

3. Fischfangüberwachungssystem nach Anspruch 2, bei dem die Bildverarbeitungseinrichtung (4) eine Analyse der durch das Bild erfaßten Maschengeometrie durchführt und die somit erhaltenen entfernungsinvarianten Maschengeometriekenndaten als Bilddaten abspeichert.

4. Fischfangüberwachungssystem nach Anspruch 2 oder 3, bei dem die Bildverarbeitungseinrichtung (4) dem für jedes Bild abzuspeichernden Datensatz von der nautischen Zentrale bereitgestellte Daten über Fanggebiet, Netzgarnmaterial, Fangdatum und -uhrzeit zufügt.

5. Fischfangüberwachungssystem nach Anspruch 1 oder 4, bei dem zusätzlich eine Entfernungsmeßeinrichtung (3) vorgesehen ist, die den Abstand zwischen Kamera (2) und Fangnetz (1) erfaßt, diese Information an die Bildverarbeitungseinrichtung (4) weiterleitet, und bei dem die Bildverarbeitungseinrichtung (4) unter Einbeziehung dieser Abstandsdaten entfernungsinvariante Maschengeometriekenndaten ermittelt.

6. Fischfangüberwachungssystem nach mindestens einem der vorhergehenden Ansprüche, bei dem jeder Datensatz zusätzlich den Namen des Kapitäns enthält.

7. Fischfangüberwachungssystem nach mindestens einem der vorhergehenden Ansprüche, bei dem die Bildverarbeitungseinrichtung (4) die Netzmaschenstruktur aus dem Bild herausfiltert und abspeichert.

8. Fischfangüberwachungssystem nach mindestens einem der vorhergehenden Ansprüche, bei dem die von der Kamera (2) erfaßten Bilder für Beweiszwecke zusätzlich mit abgespeichert werden.

9. Fischfangüberwachungssystem nach mindestens einem der Ansprüche 2 bis 8, bei dem die von der Entfernungsmeßeinrichtung (3) gelieferten Abstandsdaten zur Scharfeinstellung der Kamera (2) verwendet werden.

10. Fischfangüberwachungssystem nach mindestens einem der Ansprüche 2 bis 9, bei dem die von der Entfernungsmeßeinrichtung (3) gelieferten Abstandsdaten zur Zoomeinstellung der Kamera (2) verwendet werden, um Abstandsänderungen zwischen Kamera (2) und Fangnetz (1) auszugleichen.

11. Fischfangüberwachungssystem nach mindestens einem der vorhergehenden Ansprüche, bei dem die erstellten Datensätze über Funk an ein Kontrollorgan übermittelt werden.

12. Fischfangüberwachungssystem nach mindestens einem der vorhergehenden Ansprüche, bei dem die Bildaufnahme der Kamera (2) automatisch ausgelöst wird.

13. Fischfangüberwachungssystem nach Anspruch 12, bei dem die Auslösung einer Bildaufnahme von Windenbewegungen abhängt.

14. Fischfangüberwachungssystem nach Anspruch 12 oder 13, bei dem die Aufnahme ausgelöst wird, wenn sich das durch die Kamera (2) erfaßte Bild signifikant verändert.

15. Fischfangüberwachungssystem nach mindestens einem der vorhergehenden Ansprüche, bei dem das System durch die Schiffsbesatzung nicht manipulierbar ist, insbesondere keine Dateneingabe durch nicht-autorisierte Personen möglich ist.

16. Fischfangüberwachungssystem nach mindestens einem der vorhergehenden Ansprüche, bei dem die gespeicherten Daten nur autorisierten Personen zugänglich sind.

17. Fischfangüberwachungssystem nach mindestens einem der vorhergehenden Ansprüche, bei dem die Bildverarbeitungseinrichtung anhand von gespeicherten Stammdaten eine Plausibilitätsprüfung zwischen ermittelter Maschengeometrie und Fanggebiet durchführt.

18. Fischfangüberwachungssystem nach mindestens einem der Ansprüche 2 bis 17, bei dem die Entfernungsmeßeinrichtung (3) Ultraschall verwendet.

19. Fischfangüberwachungssystem nach mindestens einem der vorhergehenden Ansprüche, bei dem die Kamera eine Videokamera ist.

20. Fischfangüberwachungssystem nach Anspruch 19, bei dem die Videokamera eine CCD-Videokamera ist.

21. Fischfangüberwachungssystem nach Anspruch 19 oder 20, bei dem die Videokamera (2) zusätzlich für die Bordüberwachung eingesetzt wird.
